Europäisches Patentamt

(19) **European Patent Office**

**Office européen des brevets**

(11) Numéro de publication: **0 130 130**
**B1**

(12) **FASCICULE DE BREVET EUROPÉEN**

(45) Date de publication du fascicule du brevet:
04.11.87

(51) Int. Cl.⁴: **F 16 H 47/08**

(21) Numéro de dépôt: 84401347.4

(22) Date de dépôt: 26.06.84

(54) Transmission à continuité de couple avec boîte de vitesses mécanique et convertisseur.

(30) Priorité: 28.06.83 FR 8310642

(43) Date de publication de la demande:
02.01.85 Bulletin 85/1

(45) Mention de la délivrance du brevet:
04.11.87 Bulletin 87/45

(84) Etats contractants désignés:
DE GB IT NL SE

(56) Documents cité:
GB-A-1 050 283
US-A-369 861
US-A-2 568 007
US-A-2 720 298
US-A-2 739 487

Zahnradgetriebe, J. Loomann, 1970, S. 122-128

(73) Titulaire: **RENAULT VEHICULES INDUSTRIELS**
**Société Anonyme dite:**, 129 rue Servient "La
Part Dieu", F-69003 Lyon (FR)

(72) Inventeur: **Chassagnette Clément, 3, Allée des
Cerfs Bois Dieu - Lissieu, F-69380 Lozanne** (FR)
Inventeur: **Quemerais, Philippe, Le Giraud Yzeron,
F-69510 Thurins** (FR)

(74) Mandataire: **Chassagnon, Jean- Alain, REGIE
NATIONALE DES USINES RENAULT (S.0804),
F-92109 Boulogne- Billancourt Cedex** (FR)

## Description

La présente invention se rapporte à une transmission avec boîte de vitesses mécanique et convertisseur sans interruptron de couple pendant les changements de rapport de transmission.

Un des moyens les plus connus pour résoudre le problème d'une transmission avec continuité de couple pendant les changements de rapport est celui de la boîte de vitesses automatique. Cette solution présente l'inconvénient au point de vue économique de demander des moyens de mise en place bien rodés et pour l'utilisateur des inconvénients de poids et de rendement.

Un autre dispositif de transmission se développe qui concerne l'utilisation d'un convertisseur devant une boîte de vitesses mécanique. Cela est bien connu et permet, en particulier, d'assurer les phases démarrage et réembrayage au changement de rapport d'une façon parfaite, ce qui n'est pas le cas avec un seul embrayage à friction sèche, d'autant que l'utilisation en parallèle d'un embrayage verrouillant le convertisseur permet de ne pas perdre en rendement, comme cela est décrit dans le livre "Zahnradgetriebe", J. Looman, 1970, pages 122-128.

Ce système ainsi réalisé présente encore un inconvénient: c'est la discontinuité du couple (moteur ou frein) transmis aux roues lors du changement de rapport. Cela se traduit par une perte de rendement et de mobilité dans le cas général et est une gêne à l'automatisation des passages de vitesses. En effet, dans ce dernier cas l'automatisme ne pouvant tenir compte de tous les facteurs d'environnement, quelle que soit la sophistication de l'automatisme, il y aura toujours des cas de figures où un changement de vitesses sera inopportun pour le conducteur. Cette discontinuité dans la transmission du couple peut même présenter un danger. On peut, pour illustrer ce point, considérer le cas d'un véhicule en train de doubler dans une montée et où l'automatisme déclenche un passage au rapport supérieur. La discontinuité de couple pendant les fractions de secondes nécessaires handicape le véhicule et rend la manoeuvre dangereuse. On ne peut dans ce cas qu'utiliser des palliatifs tels que le blocage du changement de rapport.

Le but de la présente invention est donc de réaliser un dispositif de transmission avec une boîte de vitesses mécanique classique et un convertisseur de couple, sans interruption de couple pendant les changements de rapport de vitesses.

A cet effet, l'invention a pour objet une transmission notamment pour véhicule automobile comportant une boîte de vitesses mécanique classique, entraînée par un moteur thermique par l'intermédiaire d'un convertisseur de couple et d'un mécanisme d'embrayage installé entre le convertisseur de couple et la boîte de vitesses. Le mécanisme d'embrayage comprend un embroyage double dont les entrées de mouvement sont liées à la turbine dudit convertisseur de couple et dont la première sortie du mouvement est liée à l'entrée de la boîte de vitesses, et dont la deuxième sortie du mouvement est liée a un point quelconque de la chaîne cinématique de ladite transmission, tout en restant en aval de l'arbre d'entrée de ladite boîte de vitesses, permettant ainsi un changement de rapport de transmission sans interruption du couple.

Selon un mode de réalisation de l'invention, la deuxième sortie du mouvement de l'embrayage double est liée à la sortie du mouvement de la boîte de vitesses.

Selon un mode de réalisation de l'invention, la deuxième sortie du mouvement de l'embrayage double est liée à l'entrée du mouvement d'une boîte de gammes ladite boîte de gammes étant située en aval de ladite boîte de vitesses.

Selon un mode de réalisation de l'invention, l'embrayage double est constitué d'une cloche double d'entrée de mouvement, liée à l'arbre de la turbine ; d'un ensemble récepteur solidaire de la première sortie de mouvement et d'un ensemble récepteur solidaire de la deuxième sortie de mouvement.

Ces ensembles récepteurs peuvent être des embrayages multi-disques fonctionnant dans l'huile.

Selon un mode de réalisation de l'invention le convertisseur de couple comprend un dispositif d'embrayage de verrouillage reliant directement la pompe à la turbine dudit convertisseur.

Selon un mode de réalisation de l'invention, un ralentisseur est monté sur l'arbre de turbine.

Selon un mode de réalisation de l'invention le procédé de commande de la transmission avec une boîte de vitesses mécanique classique, lors d'un changement de rapport de transmission, comprend les étapes ci-après :
- ouverture de l'embrayage de la première sortie de mouvement ;
- fermeture de l'embrayage de la deuxième sortie de mouvement ;
- changement du rapport de transmission proprement dit ;
- ouverture de l'embrayage de la deuxième sortie de mouvement ;
- fermeture de l'embrayage de la première sortie de mouvement ;
de manière à maintenir le couple aux roues du véhicule.

Selon un mode de réalisation de l'invention, la boîte de vitesses peut être pilotée automatiquement.

La transmission selon l'invention présente les avantages ci-après:
- Le maintien du couple de transmission pendant les changements de rapport d'où un gain sur le rendement, la mobilité et la sécurité.
- Le maintien de tous les avantages de la boîte mécanique, du convertisseur et dans le cas ou il est prévu une meilleure utilisation du ralentisseur lié au convertisseur.

- L'automatisation possible du système car il n'y a pas de discontinuite dans le couple et en cela tout à fait comparable à une boîte automatique classique.

L'avantage vis-à-vis d'une boîte automatique est le nombre de rapports élevés pouvant être realisé.

- La liaison convertisseur avec la boîte de vitesses mécanique permet aussi d'avoir des raisons faibles avec peu de rapports l'ouverture étant obtenue par le convertisseur. Cela permet en ameliorant les possibilites de démarrage d'avoir par les raisons faibles de la boîte de vitesses une optimisation du régime moteur pour la consommation sans avoir trop de rapports cela comme dans le cas d'une boîte automatique classique.

La transmission selon l'invention présente de plus l'avantage de combiner une boîte de vitesses mecanique classique avec l'interêt que présente cette solution au point de vue étagement des rapports rendement, prix et poids. Toutes ces caractéristiques sont bien connues par les fabricants et les utilisateurs qui font que la solution de la boîte de vitesses mécanique est la plus universellement répendue. D'autre part la transmission selon l'invention présente tous les avantages du convertisseur à savoir: couple amplifié au démarrage, souplesse des vitesses lentes, et filtration des réembrayages. Enfin la transmission selon l'invention présente les avantages de la combinaison d'une boîte de vitesses mécanique et d'un convertisseur, ce qui permet avec peu de rapports et des raisons faibles d'avoir une ouverture importante. Or, le peu de rapports est intéressant du point de vue économique et nombre de manoeuvres à effectuer et les raisons de boîte de vitesses faibles permettent de mieux optimiser les regimes moteur, donc d'améliorer la consommation.

De plus la transmission selon l'invention assurant une transmision du couple moteur ou du couple frein ininterrompu présente la possibilite d'avoir un gain de rendement, un gain de performance, et un gain de securite; et une automatisation possible des changements de rapport comme dans une boîte de vitesses automatique classique.

D'autres caractéristiques et avantages de la présente invention ressortiront de la description qui suit de modes de réalisation donnés à titre d'exemple, en référence aux dessins annexés sur lesquels :

- la figure 1 représente le schéma d'un premier mode de réalisation d'une transmission selon l'invention ;

- la figure 2 représente le schéma d'un deuxième mode de réalisation d'une transmission selon l'invention.

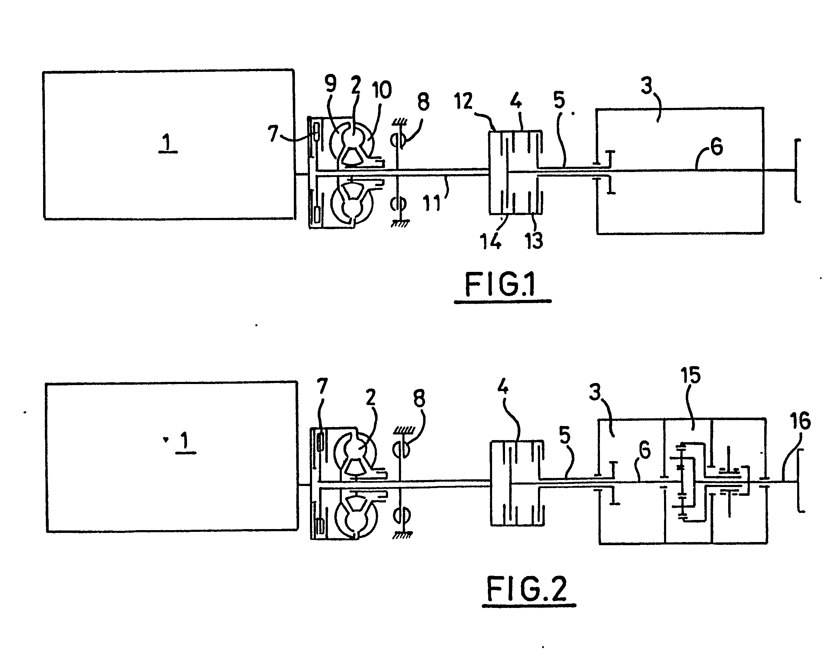

On voit sur la figure 1 un premier mode de réalisation d'une transmission selon l'invention. Cette transmission comporte une boîte de vitesses mécanique 3 entraînée par un moteur thermique par l'intermédiaire d'un convertisseur de couple 2. Le convertisseur de couple reçoit le mouvement sur sa pompe 10 et le renvoit sur la turbine 9. De plus le convertisseur de couple 2 comporte un dispositif d'embrayage de verrouillage 7 reliant directement la pompe 10 à la turbine 9 du convertisseur. Le mouvement sort par l'arbre de turbine 11 qui entraîne un embrayage double 4. Sur cet arbre de turbine 11 est monté un ralentisseur 8. L'embrayage double 4 est constitué d'une cloche double 12 d'entrée de mouvement liée à l'arbre 11 de la turbine 9. Cet embrayage double comporte d'autre part un ensemble récepteur 13 et un ensemble récepteur 14. L'ensemble récepteur 13 est lié à la première sortie de mouvement c'est-à-dire à l'arbre d'entrée 5 de la boîte de vitesses 3. L'ensemble récepteur 14 est lié à la deuxième sortie de mouvement, c'est-à-dire qu'il est solidaire de l'arbre 6 de sortie de la boîte de vitesses 3.

Les ensembles récepteurs 13 et 14 sont des embrayages multi-disques du type utilisé dans les boîtes de vitesses automatiques et fonctionnant dans l'huile.

La figure 2 représente un deuxième mode de réalisation de la transmission selon l'invention. Cette transmission comporte une boîte de vitesses mécanique 3 entraînée par un moteur thermique par l'intermédiaire d'un convertisseur de couple 2. Comme dans le cas de la figure 1, ce dispositif comprend également un dispositif d'embrayage de verrouillage 7 du convertisseur de couple 2. Il comprend aussi un ralentisseur 8 monté sur l'arbre de turbine 11. L'embrayage double 4 est constitué de la même façon que dans la figure 1, c'est-à-dire qu'il comporte une cloche double 12 d'entrée de mouvement, liée à l'arbre 11 de la turbine 9 ; et de deux ensembles récepteurs 13 et 14 qui sont des embrayages multi-disques fonctionnant dans l'huile.

Comme dans le cas de la figure 1, l'ensemble récepteur 13 est solidaire de l'arbre 5 d'entrée du mouvement dans la boîte de vitesses mecanique 3. Par contre, le dispositif récepteur 14 est solidaire de l'arbre de sortie de boîte de vitesses, lequel arbre de sortie 6 de boîte de vitesses 3 est l'arbre d'entrée de mouvement d'une boîte de gammes 15. La boîte de gammes 15 est située immédiatement en aval de la boîte de vitesses 3 et accolée à elle. La boîte de gammes 15 peut être d'un type classique connu tel qu'un train épicycloïdal. Le mouvement de la transmission sort par l'arbre de sortie 16.

Pour ces deux figures, le ralentisseur peut être réalisé par le convertisseur lui-même, ou séparé dans un organe distinct 8. Ce ralentisseur peut être réalisé par les technologies connues tels que les moyens électriques, par courant de foucault, hydrauliques, frottements secs etc.

Le chargement de rapport de transmission se fait suivant le principe de fonctionnement suivant: pour assurer le changement d'un rapport, le convertisseur 2 n'étant pas verrouillé, on réalise les opérations suivantes :
- ouverture de l'embrayage 13,
- et simultanément fermeture de l'embrayage

14,
- changement du rapport de transmission proprement dit,
- ouverture de l'embrayage 14,
- et simultanément fermeture de l'embrayage 13.

Cette façon de procéder permet de libérer les pignons dans la boîte de vitesses lors du changement de rapport et, d'assurer la continuité du couple sur l'arbre de sortie de boîte.

Selon un mode de réalisation général de l'invention, l'embrayage double 4 a toujours la première sortie du mouvement qui est liée à l'entrée de la boîte de vitesses 3, et a la deuxième sortie du mouvement qui est liée à un point quelconque de la chaîne cinématique de ladite transmission, tout en restant en aval de l'arbre d'entrée 5 de ladite boîte de vitesses 3. Dans le cas de la figure 2, la deuxième sortie du mouvement de l'embrayage double est reliée à l'entrée de la boîte de gammes 15. Dans ce cas, lors du changement de gamme, on n'aura pas l'effet de maintien du couple conservé. Toutefois, cela correspond à des manoeuvres peu fréquentes et où la vitesse du véhicule est en général très faible. Cela ne pénalise pas le véhicule.

La commande d'une telle transmission selon l'invention, que ce soit le mode de réalisation représenté sur la figure 1 ou que ce soit le mode de réalisation représenté sur la figure 2, peut être pilotée de façon automatique, comme cela est bien connu dans les boîtes de vitesses automatiques classiques.

## Revendications

1. Transmission, notamment pour véhicule automobile, comportant une boîte de vitesses mecanique classique (3), entraînée par un moteur thermique (1) par l'intermédiaire d'un convertisseur de couple (2) et d'un mécanisme d'embrayage installé entre le convertisseur de couple et la boîte de vitesses, caractérisée en ce que le mécanisme d'embrayage comprend un embrayage double (4) dont les entrées de mouvement sont liées à la turbine (9) dudit convertisseur de couple (2), et dont la première sortie du mouvement est liée à l'entrée de la boîte de vitesses (3), et dont la deuxième sortie du mouvement est liée à un point quelconque de la chaîne cinématique de ladite transmission, tout en restant en aval de l'arbre d'entrée de ladite boîte de vitesses, permettant ainsi un changement de rapport de transmission sans interruption de couple.

2. Transmission selon la revendication 1, caractérisée en ce que la deuxième sortie du mouvement de l'embrayage double (4) est liée à la sortie du mouvement de la boîte de vitesses (3).

3. Transmission selon la revendication 1, caractérisée en ce que la deuxième sortie du mouvement de l'embrayage double (4) est liée à l'entrée du mouvement d'une boîte de gammes (15), ladite boîte de gammes (15) étant située en aval de ladite boîte de vitesses (3).

4. Transmission selon l'une quelconque des revendications 1 à 3, caractérisée en ce que l'embrayage double (4) est constitué d'une cloche double (12) d'entrée de mouvement, liée à l'arbre (11) de la turbine (9) ; d'un ensemble récepteur (13) solidaire de la première sortie de mouvement ; et d'un ensemble récepteur (14) solidaire de la deuxième sortie de mouvement.

5. Transmission selon la revendication 4, caractérisée en ce que chaque ensemble récepteur (13, 14) est un embrayage multi-disques fonctionnant dans l'huile.

6. Transmission selon l'une quelconque des revendications precedentes, caractérisée en ce que le convertisseur de couple (2) comprend un dispositif d'embrayage de verrouillage (7) reliant directement la pompe (10) à la turbine (9).

7. Transmission selon l'une quelconque des revendications 1 à 5, caractérisée en ce qu'un ralentisseur (8) est monté sur l'arbre de turbine (11).

8. Procédé de commande de la transmission selon la revendication 4, caractérisé en ce que lors d'un changement de rapport de transmission, il y a les étapes ci-après :
- ouverture de l'embrayage (13),
- fermeture de l'embrayage (14),
- changement du rapport de transmission proprement dit,
- ouverture de l'embrayage (14),
- fermeture de l'embrayage (13),
de manière à maintenir le couple aux roues du véhicule.

9. Procédé selon la revendication 8, caractérisée en ce que la boîte de vitesses (3) est pilotée automatiquement.

## Patentansprüche

1. Kraftübertragung, insbesondere für Kraftfahrzeuge, mit einem mechanischen herkömmlichen Getriebe (3), das von einem thermischen Motor (1) mittels eines Drehmomentwandlers (2) angetrieben wird und mit einer Kupplungsanordnung, die zwischen dem Drehmomentwandler und dem Getriebe eingebaut ist, dadurch gekennzeichnet, daß die Kupplungsanordnung eine Doppelkupplung (4) aufweist, deren Antriebseingänge mit der Turbine (9) des Drehmomentwandlers (2) verbunden sind, deren erster Abtriebsausgang mit dem Eingang des Getriebes (3) verbunden ist und deren zweiter Abtriebsausgang mit einem beliebigen Punkt der kinematischen Kette der Kraftübertragung verbunden ist, jedoch der Eingangswelle des Getriebes nachgeschaltet ist, um so eine Veränderung des Kraftübertragungsverhältnisses ohne Unterbrechung des Drehmoments zu ermöglichen.

2. Kraftübertragung nach Anspruch 1, dadurch gekennzeichnet, daß der zweite Abtriebsausgang der Doppelkupplung (4) mit dem Abtriebsausgang des Getriebes (3) verbunden ist.

3. Kraftübertragung nach Anspruch 1, dadurch gekennzeichnet, daß der zweite Abtriebsausgang der Doppelkupplung (4) mit dem Antriebseingang eines Umlaufgetriebes (15) verbunden ist, wobei das Umlaufgetriebe (15) dem Getriebe (3) nachgeschaltet ist.

4. Kraftübertragung nach einem der Ansprüche 1 bis 3, dadurch gekennzeichnet, daß die Doppelkupplung (4) aus einer eingangsseitigen Doppelglocke (12) besteht, die mit der Welle (11) der Turbine (9) verbunden ist, und aus einer mit dem ersten Abtriebsausgang fest verbundenen Aufnahmeanordnung (13) und einer mit dem zweiten Abtriebsausgang fest verbundenen Aufnahmeeinheit (14).

5. Kraftübertragung nach Anspruch 4, dadurch gekennzeichnet, daß jede Aufnahmeeinheit (13, 14) eine mit Öl arbeitende Mehrscheibenkupplung ist.

6. Kraftübertragung nach einem der vorhergehenden Ansprüche, dadurch gekennzeichnet, daß der Drehmomentwandler (2) eine Verriegelungskupplungsanordnung (7) aufweist, die die Pumpe (10) direkt mit der Turbine (9) verbindet.

7. Kraftübertragung nach einem der Ansprüche 1 bis 5, dadurch gekennzeichnet, daß auf der Turbinenwelle (11) eine Bremsanordnung angeordnet ist.

8. Verfahren zur Steuerung der Kraftübertragung nach Anspruch 4, dadurch gekennzeichnet, daß während einer Änderung des Kraftübertragungsverhältnisses die folgenden Schritte auftreten:
- Öffnen der Kupplung (13),
- Schließen der Kupplung (14),
- Veränderung des Kraftübertragungsverhältnisses,
- Öffnen der Kupplung (14),
- Schließen der Kupplung (13),
derart, daß das Drehmoment an den Fahrzeugrädern erhalten bleibt.

9. Verfahren nach Anspruch 8, dadurch gekennzeichnet, daß das Getriebe (3) automatisch angesteuert wird.

**Claims**

1. A transmission, in particular for a motor vehicle, comprising a conventional mechanical gearbox (3) driven by a heat engine (1) by way of a torque converter (2) and a clutch mechanism installed between the torque converter and the gearbox characterised in that the clutch mechanism comprises a double clutch (4) whose movement inputs are connected to the turbine (9) of said torque converter (2) and whose first movement output is connected to the input of the gearbox (3) and whose second movement output is connected to any point of the kinematic chain of said transmission, while remaining downstremm of the input shaft of said gearbox, thus permitting a change in transmission ratio without interruption in torque.

2. A transmission according to claim 1 characterised in that the second movement output of the double clutch (4) is connected to the movement output of the gearbox (3).

3. A transmission according to claim 1 characterised in that the second movement output of the double clutch (4) is connected to the movement input of a range box (15), said range box (15) being disposed downstream of said gearbox (3).

4. A transmission according to any one of claims 1 to 3 characterised in that the double clutch (4) is formed by a double movement input bell arrangement (12) connected to the shaft (11) of the turbine (9), a receiver assembly (13) which is fixed with respect to the first movement output; and a receiver assembly (14) which is fixed with respect to the second movement output.

5. A transmission according to claim 4 characterised in that each receiver assembly (13, 14) is a multi-disc clutch which operates in oil.

6. A transmission according to any one of the preceding claims characterised in that the torque converter (2) comprises a locking clutch means (7) for directly connecting the pump (10) to the turbine (9).

7. A transmission according to any one of claims 1 to 5 characterised in that a braking means (8) is mounted on the turbine shaft (11).

8. A process for controlling the transmission according to claim 4 characterised in that, when changing a transmission ratio, the following steps are involved:
- opening of the clutch (13),
- closure of the clutch (14),
- changing of the transmission ratio in the true sense,
- opening of the clutch (14),
- closure of the clutch (13),
so as to maintain the torque to the wheels of the vehicle.

9. A process according to claim 8 characterised in that the gearbox (3) is automatically pilot-controlled.

FIG.1

FIG.2

0 130 130